# EUROPÄISCHE PATENTSCHRIFT

(11) **EP 1 179 289 B1**
(45) Veröffentlichungstag und Bekanntmachung des Hinweises auf die Patenterteilung: **04.04.2007**
(21) Anmeldenummer: 01118468.6
(22) Anmeldetag: 01.08.2001
(51) Int. Cl.: A01B 73/02

(54) **Faltbares landwirtschaftliches Arbeitsgerät**
Foldable agricultural working tool
Outil pliable de travail agricole

(30) Priorität: 09.08.2000 US 634396
(43) Veröffentlichungstag der Anmeldung: 13.02.2002
(73) Patentinhaber: DEERE & COMPANY, Moline, Illinois 61265-8098 (US)
(72) Erfinder: Noonan, James Thomas, Johnston, IA 50131 (US); Parker, Paul David, Ankeny, IA 50021 (US); Payne, David Alan, Urbandale, IA 50322 (US); Mosdal, Brian Thomas, Ankeny, IA 50021 (US)
(74) Vertreter: Holst, Sönke

(56) Entgegenhaltungen:
- EP-A- 1 050 205
- GB-A- 2 110 061
- US-A- 5 839 516
- US-A- 6 076 611

## Beschreibung

Die Erfindung betrifft ein faltbares landwirtschaftliches Arbeitsgerät mit einem sich quer zu einer Vorwärtsrichtung erstreckenden Mittelrahmen, Flügelabschnitten, die schwenkbar an gegenüberliegenden Seiten des Mittelrahmens angebracht und zwischen einer ausgefalteten Feldarbeitsposition, in der sie sich nach außen erstrecken, und einer eingefalteten Transportposition über dem Mittelrahmen bewegbar sind, mit den Flügelabschnitten verbundenen, anhebbaren Einrichtungen, die zwischen ausgestreckten Arbeitspositionen und zurückgezogenen Positionen bewegbar sind und einander zugewandt sind, wenn sich die Flügelabschnitte in der Transportposition befinden, und einer Gerätesteuereinheit, die mit den anhebbaren Einrichtungen verbunden ist und ihr Ausstrecken und Einziehen steuert, wobei Elemente zum Fühlen der Positionen der Flügelabschnitte vorhanden sind, die auf die Bewegung der Flügelabschnitte zwischen der Arbeitsposition und der Transportposition reagieren und der Gerätesteuereinheit Positionssignale zuführen und die Gerätesteuereinheit auf die Positionssignale derart reagiert, dass sie die anhebbaren Einrichtungen zurückzieht, bevor die Flügelabschnitte die Transportposition erreichen.

Faltbare Rahmen von Arbeitsgeräten werden häufig für landwirtschaftliche Anwendungen benutzt, um eine große Arbeitsbreite auf dem Feld und eine kleinere Arbeitsbreite beim Transport zu erreichen. Einige Arbeitsgeräte weisen werkzeugtragende Rahmen mit fünf oder mehr Abschnitten auf, einschließlich äußerster Flügelabschnitte, die zum Transport über entsprechende innerste Flügelabschnitte gefaltet werden. Die inneren Flügelabschnitte sind durch ein Scharnier an einem Hauptrahmenabschnitt befestigt, so dass die eingefaltete Kombination des inneren und äußeren Flügels auf jeder Seite des Arbeitsgeräts in eine senkrechte Transportposition gefaltet werden kann. In der Transportposition sind die Werkzeuge und anhebbare Radzusammenbauten an den gegenüberliegenden, äußersten Flügelabschnitten in unmittelbarer Nähe zueinander oberhalb des mittleren Abschnitts des Hauptrahmens angeordnet. Die anhebbaren Radzusammenbauten oder andere vertikal verstellbare Komponenten an den äußersten Flügelabschnitten können, wenn sie nicht vollständig eingezogen oder in ihre spezielle Ruheposition verbracht sind, sich berühren, wenn die Flügelabschnitte in ihre endgültigen Transportpositionen verbracht werden. Derartige Berührungen können Beschädigungen von Bauelementen zur Folge haben und begrenzen das Verschwenken der Rahmenabschnitte, so dass die Transportbreite nicht minimiert ist. Außerdem können die in der Transportposition über die inneren Flügelabschnitte hinausragenden anhebbaren Radzusammenbauten die Transportbreite vergrößern und den Massenschwerpunkt der Abschnitte nach außen verlagern.

Verschiedene Einrichtungen wurden eingesetzt, um die Berührungen zu vermeiden, wie mechanische Verriegelungen für Radzusammenbauten des in der US 4 974 684 gezeigten Typs. Relativ komplexe hydraulische Steuerschaltungen, wie sie in der US 4 700 784 gezeigt werden, wurden ebenfalls vorgeschlagen. Diese waren jedoch nicht ganz effektiv und sind nicht ohne weiteres an automatische Steuersysteme anpassbar, die eine Gerätesteuereinheit (ICU, engl.: Implement Control Unit) aufweisen, welche eine individuelle Steuerung der Gerätehubzylinder des in der US 5 957 218 gezeigten Typs ermöglicht.

Die GB 2 110 061 A beschreibt ein Bodenbearbeitungsgerät mit mehreren seitlich nebeneinander angeordneten Walzen. Eine mittlere Walze ist an einem Mittelrahmen befestigt, während jeweils zwei äußere Walzen an linken und rechten Seitenrahmen angebracht sind. Die Seitenrahmen sind um die Hochachse am Mittelrahmen befestigt und sind zwischen einer Arbeitsposition, in der sie sich quer zur Fahrtrichtung erstrecken und einer Transportposition, in der sie sich entgegen der Fahrtrichtung vom Mittelrahmen nach hinten erstrecken, bewegbar. An den Seitenrahmen ist jeweils ein Rad schwenkbar angebracht. Es kann zwischen einer Transportposition, in der es sich parallel zum Seitenrahmen erstreckt, einer angehobenen Position ohne Bodenkontakt und einer dritten Position bewegt werden, in der es Bodenkontakt hat, in der seine Drehachse aber einen von 90° verschiedenen Winkel mit dem Seitenrahmen einschließt, bewegt werden. Die dritte Position wird angesteuert, wenn das Bodenbearbeitungsgerät von der Transport- in die Arbeitsposition verbracht werden soll. Der Traktor fährt rückwärts und durch die gewählte Anordnung der Räder werden die Seitenrahmen nach außen verschwenkt. In einer Ausführungsform sind die zum Bewegen der Räder dienenden Zylinder mit einer Steuerung ausgestattet, die die Räder selbsttätig abhängig vom Winkel der Seitenrahmen gegenüber dem Mittelrahmen in die jeweils anzunehmende Stellung verbringt. Hier sind die Räder nicht einander zugewandt, so dass keine Gefahr besteht, dass sie in der Transportposition kollidieren könnten.

Die der Erfindung zugrunde liegende Aufgabe wird darin gesehen, ein verbessertes Faltsystem für ein aus mehreren Abschnitten zusammengesetztes Arbeitsgerät bereitzustellen, das Hubräder oder andere vertikal verstellbare Elemente aufweist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt ein Faltsystem für ein aus mehreren Abschnitten aufgebautes Arbeitsgerät vor, wie ein Bodenbearbeitungsgerät oder ein Meißelpflug mit fünf Abschnitten, das eine Struktur zum Einfalten der Flügel aufweist, um die beiden äußeren Flügelabschnitte mit anhebbaren Einrichtungen über entsprechende innere Flügelabschnitte bzw. einen Mittelrahmen einzufalten. Ein Näherungsschalter oder ein anderes einfaches, zur Abgabe einer Information über die Position des Flügelabschnitts eingerichtetes Element versorgt eine Gerätesteuereinheit mit einem Einfaltbedingungssignal. Die Steuerung wiederum beaufschlagt Antriebe für anhebbare Einrichtungen der Flügelabschnitte mit Hubsignalen. Die an den Seiten der Flügelabschnitten angebrachten anhebbaren Einrichtungen werden selbsttätig in Stellungen verbracht, in denen sie sich nicht in unerwünschter Weise untereinander berühren können, wenn die Flügelabschnitte in Richtung auf eine eingefaltete Transportposition zu bewegt werden.

Die Gerätesteuereinheit kann nicht nur das Falten der Flügelabschnitte und das Einziehen und Ausfahren der anhebbaren Einrichtungen steuern, sondern mittels der anhebbaren Einrichtungen auch die Höhe und/oder Nivellierung des Arbeitsgeräts. Auch beliebige andere anhebbare Einrichtungen, die sich in der Transportposition nicht unbedingt berühren können müssen, können gesteuert werden, wie anhebbare Radzusammenbauten an inneren Flügelabschnitten von Arbeitsgeräten mit fünf Abschnitten. Der Massenschwerpunkt wird dadurch näher an die Mitte des Arbeitsgeräts verlagert, so dass die Stabilität beim Transport vergrößert ist.

Zweckmäßigerweise wird ein Positionssignal erzeugt, wenn einer oder beide Flügelabschnitte beim Einklappen eine vorbestimmte Faltposition erreichen oder überschreiten. Auf das Positionssignal werden die anhebbaren Einrichtungen zurückgezogen. Analog können die anhebbaren Einrichtungen auf ein entsprechendes Positionssignal hin ausgefahren werden, wenn einer oder beide Flügelabschnitte beim Ausfalten eine vorbestimmte Faltposition erreichen bzw. überschreiten. Die vorbestimmten Faltpositionen liegen in der Regel zwischen der Transport- und der Arbeitsposition und werden dann gegeben, wenn eine Berührung zwischen anhebbaren Einrichtungen beim Einfalten möglich bzw. beim Ausfalten nicht mehr möglich ist. Beim Einfalten werden die anhebbaren Einrichtungen erst dann eingezogen, wenn die die anhebbaren Einrichtungen tragenden Flügelabschnitte vom Erdboden abgehoben sind. Auch sind die anhebbaren Einrichtungen ausgefahren, bevor die entsprechenden Flügelabschnitte die Arbeitsposition erreichen. Die Ansteuerung der anhebbaren Einrichtungen kann für beide Seiten getrennt anhand der jeweiligen Positionssignale erfolgen oder erst dann, wenn Positionssignale für beide Seiten vorliegen. Man erreicht dadurch, dass sich die anhebbaren Einrichtungen bereits dann bewegen, bevor die Arbeits- oder Transportstellung erreicht ist. Das Ein- und Ausfalten wird beschleunigt.

Als Elemente zum Fühlen der Position der Flügelelemente können am Mittelrahmen (oder an einem Flügelabschnitt) abgestützte Näherungsschalter und/oder mit je einem Flügelabschnitt verbundene Neigungsschalter dienen.

In einer bevorzugten Ausführungsform erfasst ein Fühler einen Positionswert über die Position des Mittelrahmens des Arbeitsgeräts gegenüber dem Erdboden. Der erfasste Positionswert kann zur Steuerung der anhebbaren Einrichtungen dienen. Dadurch wird es möglich, die Flügelabschnitte und den Mittelrahmen des Arbeitsgeräts selbsttätig zu nivellieren.

Viele Arbeitsgeräte weisen einen Mittelrahmen auf, an dessen beiden Seiten jeweils ein innerer Flügelabschnitt und ein äußerer Flügelabschnitt angeordnet sind. Der äußere Flügelabschnitt ist einfaltbar am inneren Flügelabschnitt angelenkt und durch entsprechende Mittel, z. B. Hydraulikzylinder zwischen einer angehobenen Transportposition und einer abgesenkten (ausgefalteten) Arbeitsposition beweglich. Dabei werden die äußeren Flügelabschnitte vorzugsweise aus der Arbeitsstellung, in der sie horizontal und parallel zum inneren Flügelabschnitt orientiert sind, nach oben und innen über die inneren Flügelabschnitte gefaltet. Danach werden die inneren Flügelabschnitte mit den eingefalteten äußeren Flügelabschnitten nach oben und innen aufeinander zu über einen Mittelrahmen gefaltet. In einer bevorzugten Ausführungsform der Erfindung weisen auch die äußeren Flügelabschnitte anhebbare Einrichtungen auf, die durch die Gerätesteuereinheit in Abhängigkeit von Positionssignalen gesteuert werden, die durch Elemente zum Fühlen der Position der äußeren Flügelabschnitte erzeugt werden. Die Gerätesteuereinheit veranlasst, dass die anhebbaren Einrichtungen der äußeren Flügelabschnitte eingezogen werden, bevor die äußeren Flügelabschnitte die Transportposition erreichen. Auf diese Weise wird eine Berührung der anhebbaren Einrichtungen der äußeren und inneren Flügelabschnitte in der Transportposition vermieden.

Die anhebbaren Einrichtungen sind insbesondere Radzusammenbauten zum Abstützen der Flügelabschnitte auf dem Erdboden. Das erfindungsgemäße System kann auch verwendet werden, um andere anhebbare Einrichtungen an den Flügelabschnitten zu steuern, wie Werkzeuganordnungen oder Reihenbearbeitungseinheiten, wobei eine Berührung der Einrichtungen untereinander vermieden wird, wenn die Flügelabschnitte in eine Transportposition verbracht werden und die Einrichtungen ordnungsgemäß zu positionieren, wenn sie in die Arbeitsposition verbracht werden.

Bei einem Arbeitsgerät mit inneren und äußeren Flügelabschnitten kann die Gerätesteuereinheit die anhebbaren Einrichtungen sowohl eines inneren als auch eines äußeren Flügelabschnitts einziehen, wenn der jeweilige innere Flügelabschnitt beim Einfalten eine vorbestimmte Faltposition erreicht oder überschreitet. Analog können die anhebbaren Einrichtungen auf dem inneren und dem äußeren Flügelabschnitt ausgefahren werden, wenn der innere Flügelabschnitt beim Ausfalten eine vorbestimmte Faltposition erreicht oder überschreitet.

Erfassen die Fühler die Position eines inneren Flügelabschnitts relativ zu einem Mittelrahmen, hat der Bediener die Möglichkeit, ein Arbeitsgerät mit fünf Abschnitten bei schmalen Bearbeitungsflächen oder bei schweren Bodenbedingungen als Arbeitsgerät mit nur drei Abschnitten zu nutzen, indem einfach nur die inneren Flügelabschnitte in die Arbeitsstellung ausgeklappt werden, die äußeren Flügelabschnitte aber in der Transportstellung verbleiben. Die anhebbaren Einrichtungen werden trotz der Tatsache, dass die äußeren Flügelabschnitte keine Arbeit verrichten, korrekt arbeiten.

In den Zeichnungen ist ein nachfolgend näher beschriebenes Ausführungsbeispiel der Erfindung dargestellt. Es zeigt:
- Fig. 1: eine rückwärtige Ansicht der rechten Hälfte eines Arbeitsgeräts mit fünf Abschnitten, wobei sich der Rahmen in der ausgefalteten Position befindet;
- Fig. 2: eine rückwärtige Ansicht des Arbeitsgeräts der Figur 1, die den ganzen Rahmen teilweise eingefaltet in einer Stellung zwischen einer Feldarbeitsposition und einer Arbeitsposition zeigt;
- Fig. 2a: eine vergrößerte Ansicht der in Figur 2 eingekreisten Fläche einschließlich des Flügelpositionsschalters;
- Fig. 3: eine Ansicht des Arbeitsgeräts der Figur 1, wobei der Rahmen in der völlig eingefalteten Transportposition ist; und
- Fig. 4: ein Schema des Steuersystems des Arbeitsgeräts der Figur 1 einschließlich der zur Detektion der Rahmeneinfaltbedingung und zum Beaufschlagen einer Gerätesteuereinheit mit Positionssignalen verwendeten Fühler.

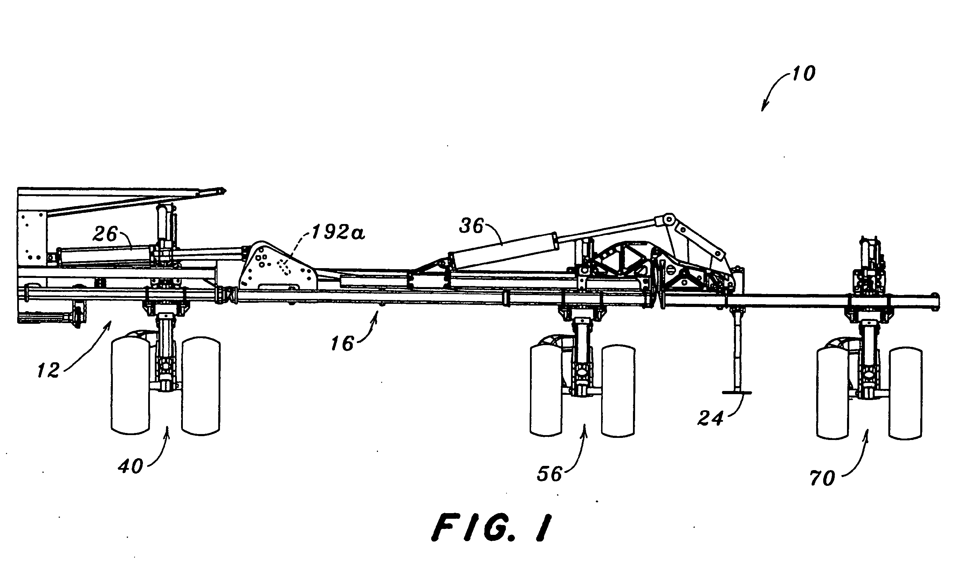

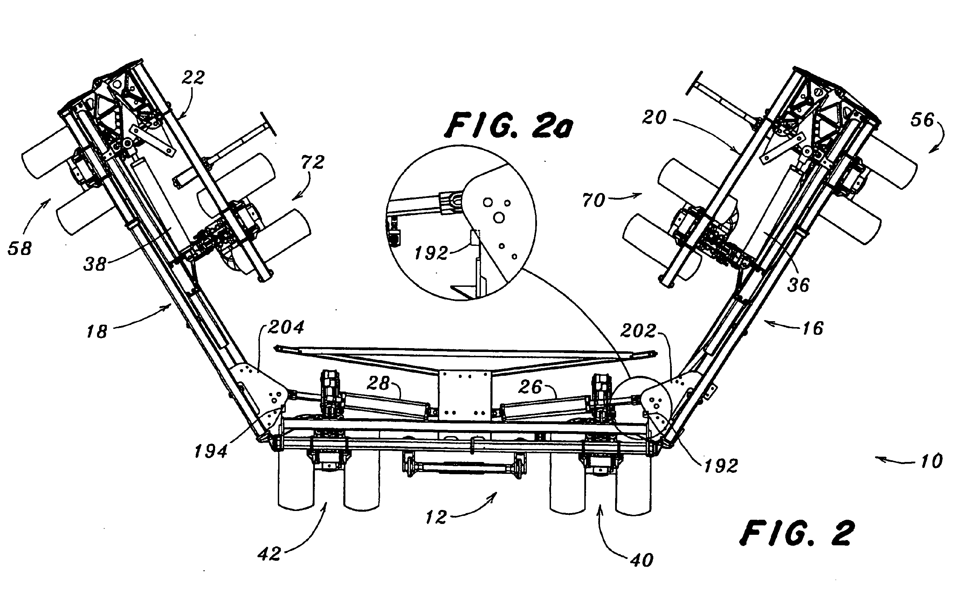

In den Figuren 1 und 2 ist ein Rahmen 10 eines Arbeitsgeräts für einen Feldkultivator, einen Meißelpflug oder ein anderes faltbares Arbeitsgerät (insbesondere Bodenbearbeitungsgerät) mit mehreren Abschnitten gezeigt. Der Rahmen 10 umfasst einen Haupt-oder Mittelrahmen 12, innere Flügelrahmen oder -abschnitte 16 und 18 mit schwenkbar mit gegenüberliegenden Seiten des Mittelrahmens 12 verbundenen inneren Enden und äußere Flügelrahmen oder -abschnitte 20 und 22, die schwenkbar mit den äußeren Enden der jeweiligen Abschnitte 16 und 18 verbunden sind. Der Rahmen 10 trägt eine Vielzahl von Bodenbearbeitungswerkzeugen 24, von denen einige in den Zeichnungen zur Vereinfachung entfernt sind.

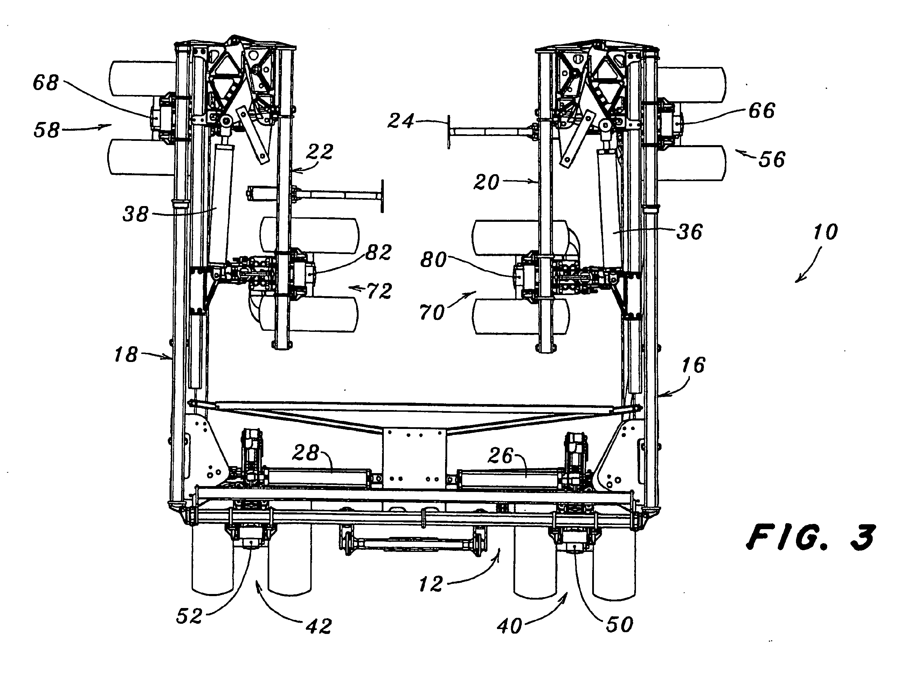

Innere Flügelfaltzylinder 26 und 28 sind zwischen dem Mittelrahmen 12 und den inneren Flügelabschnitten 16 und 18 angeschlossen. Die Flügelfaltzylinder 26 und 28 sind mit einem konventionellen Steuerventil auf dem (nicht gezeigten) ziehenden Fahrzeug verbunden, um die Flügelfaltzylinder 26, 28 entweder auszustrecken oder einzuziehen und die Flügelabschnitte 16 und 18 zwischen der völlig ausgefalteten Feldarbeitsposition (Figur 1) und der eingefalteten Transportposition (Figur 3) zu verschwenken. Äußere Flügelfaltzylinder 36 und 38 sind zwischen den jeweiligen inneren Flügelabschnitten 16 und 18 und den äußeren Flügelabschnitten 20 und 22 angeschlossen, um die Flügelabschnitte 20 und 22 zwischen ausgefalteten Positionen (Figur 1) und eingefalteten Positionen (Figur 2) zu verschwenken. In den eingefalteten Positionen sind die äußeren Flügelabschnitte 20, 22 näherungsweise parallel zu den inneren Flügelabschnitten 16, 18 angeordnet, bevor die inneren Flügelabschnitte 16, 18 in die Transportposition (Figur 3) verschwenkt werden. Die äußeren Flügelfaltzylinder 36 und 38 sind auch mit einem Steuerventil verbunden, das sich auf dem ziehenden Fahrzeug befindet, um sie auszudehnen oder einzuziehen. Das Hydrauliksystem stellt sicher, dass die äußeren Flügelabschnitte 20, 22 sich über die inneren Flügelabschnitte 16, 18 falten, bevor die inneren Flügelabschnitte 16, 18 nach oben in die Transportposition verschwenkt werden. Während des Auseinanderfaltens schwenken die inneren Flügelabschnitte 16 und 18 nach unten in ihre Feldarbeitspositionen, bevor die äußeren Flügelabschnitte 20 und 22 sich aus ihrer Transportposition ausfalten, in der sie sich im Wesentlichen parallel zu den Rahmen 16 und 18 erstrecken.

Anhebbare Radzusammenbauten 40 und 42 tragen den Mittelrahmen 12 über den Boden und umfassen doppeltwirkende Zylinder 46 und 48, die jeweils mit einem schwenkbar mit dem Mittelrahmen 12 verbundenen Radträgerarm 50 bzw. 52 verbunden sind. Anhebbare Radzusammenbauten 56 und 58 tragen die inneren Flügelabschnitte 16 und 18 in der Feldarbeitsposition und umfassen doppelt wirkende Zylinder 62 und 64, die mit schwenkbar mit den jeweiligen Flügelabschnitten 16 und 16 verbundenen Radträgerarmen 66 und 68 verbunden sind. Die äußeren Flügelabschnitte 20 und 22 sind in der Feldarbeitsposition durch anhebbare Radzusammenbauten 70 und 72 abgestützt, die doppelt wirkende Zylinder 74 und 74 umfassen, die mit Radträgerarmen 80 und 82 verbunden sind.

Wenn der Rahmen 10 auseinander gefaltet wird, bewegen die anhebbaren Radzusammenbauten 40, 42, 56, 58, 70 und 72 den Rahmen 10 zwischen einer angehobenen Position, in der die Werkzeuge 24 in einem wesentlichen Abstand oberhalb des Bodens angeordnet sind (Figur 1) und abgesenkten Bodeneingriffspositionen, in denen die Werkzeuge 24 in den Boden eindringen. In der abgesenkten Bodeneingriffsposition können die Zylinder der anhebbaren Radzusammenbauten ausgedehnt oder zusammengezogen werden, um die Eindringtiefe der Werkzeuge 24 zwischen einer Position, in der der Boden oberflächlich überstrichen wird, und einer tiefsten Bodenbearbeitungsposition zu verstellen. Die Zylinder der anhebbaren Radzusammenbauten können in beliebige Rahmenarbeitspositionen verstellt werden, um eine oder mehrere der Positionen der Flügelabschnitte im Verhältnis zur Position des Mittelrahmens 12 zu variieren und den Rahmen zu nivellieren oder um die Höhe der Flügelabschnitte der einzelnen Seiten unterschiedlich zu verändern. Zusätzliche unabhängig gesteuerte anhebbare Radzusammenbauten können in der Vorwärtsbewegungsrichtung von den in den Figuren gezeigten versetzt sein, so dass die Nivellierung des Rahmens in Vorwärts/Rückwärtsrichtung eingestellt werden kann.

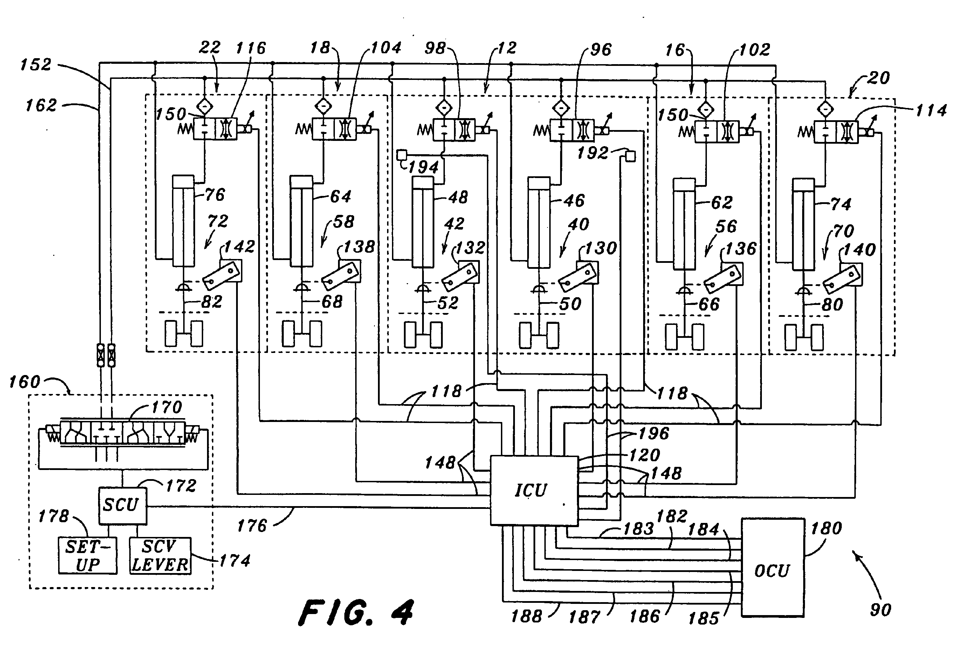

In Figur 4 ist ein Hubsteuersystem 90 gezeigt. Es umfasst einzelne elektrohydraulische Zwei-Wege/Zwei-Stellungs-Steuerproportionalventile 96 und 98, die mit den Zylindern 46 und 48 zur Steuerung der anhebbaren Radzusammenbauten 40 und 42 verbunden sind, um den Mittelrahmen 12 gegenüber dem Boden zu positionieren. Elektrohydraulische Steuerventile 102 und 104 sind mit den Zylindern 62 und 64 verbunden, um die anhebbaren Radzusammenbauten 56 und 58 zu steuern, um in der Feldarbeitsposition die inneren Flügelabschnitte 16 und 18 zu positionieren und die Position der anhebbaren Radzusammenbauten 56 und 58 beim Ein- und Ausfalten zu steuern. In ähnlicher Weise sind elektrohydraulische Steuerventile 114 und 116 an den Zylindern 74 und 76 angeschlossen, um die äußeren Flügelabschnitte 20 und 22 gegenüber dem Boden zu positionieren, während die Flügelabschnitte 20 und 22 in der Feldarbeitsposition sind, und die Position der anhebbaren Radzusammenbauten 56 und 58 während des Ein- und Ausfaltens zu steuern.

Die Steueranschlüsse der Ventile 96, 98, 102, 104, 114 und 116 sind durch Leitungen 118 an Ausgängen einer Gerätesteuereinheit (ICU) 120 angeschlossen, die im Wesentlichen des Typs ist, wie er in der vorhin genannten US 5 957 128 beschrieben ist. Fühler 130, 132, 136, 138, 140 und 142 für die Position der anhebbaren Radzusammenbauten stehen mit den jeweiligen anhebbaren Radzusammenbauten 40, 42, 56, 58, 70 und 72 in Betriebsverbindung und stellen durch Leitungen 148 der Gerätesteuereinheit 120 Positionssignale der anhebbaren Radzusammenbauten bereit, die vom Ausdehnen und Einziehen der Zylinder abhängen. Wie dargestellt sind die Fühler 130 - 142 angeschlossen, die Ausdehnung der Zylinder anzuzeigen, die direkt mit der Position der jeweiligen Radarme 50, 52, 66, 68, 80, 82 in Beziehung steht. Es können jedoch andere Typen von Fühlern verwendet werden, um Informationen über die Positionen bereitzustellen.

Wie in Figur 4 dargestellt, sind die Ventile 96, 98, 102, 104, 114 und 116 Proportionalventile, von denen jedes einen Eingangsanschluss 150, der mit einer Hydraulikleitung 152 verbunden ist, und einen Eingangsanschluss aufweist, der mit dem kolbenraumseitigen Ende des entsprechenden Zylinders 46, 48, 62, 64, 74 und 76 der anhebbaren Radzusammenbauten verbunden ist.

Die Hydraulikleitung 152 ist über einen ersten Ausgang eines Steuerventilzusammenbaus, das insgesamt mit 160 gekennzeichnet ist, auswählbar mit einer Quelle unter Druck stehender Hydraulikflüssigkeit verbunden, die sich auf dem ziehenden Fahrzeug befindet. Eine zweite Hydraulikleitung 162 ist mit einem zweiten Ausgang des Steuerventilzusammenbaus 160 und dem kolbenstangenseitigen Ende jedes der Zylinder 46, 48, 62, 64, 74 und 76 verbunden.

Der Steuerventilzusammenbau 160 umfasst ein Steuerventil 170 mit vier auswählbaren Positionen, das Positionen zum Ausstrecken, Blockieren, Zurückziehen und Schweben (Gleiten) aufweist und in Figur 4 in der Blockierposition gezeigt ist. Das Steuerventil 170 ist mit einer auswählbaren Steuereinheit 172 verbunden, die durch einen manuell betätigten Hebel 174 in der Kabine des ziehenden Fahrzeugs und durch eine Ventilsignalausgabeleitung 176 von der Gerätesteuereinheit 120 gesteuert wird. Die Steuereinheit 172 ist auch mit einer Einrichtsteuerung 178 verbunden, um anfängliche Referenzwerte bereitzustellen und Arbeitspunkte für die jeweilige Kombination aus Arbeitsgerät und ziehendem Fahrzeug zu setzen. Der Hebel 174 des Steuerventils 170 hat Positionen zum Anheben, Absenken, Halten und Schweben, sowie eine Position für eine automatische Höhen/Tiefensteuerung, in der die Gerätesteuereinheit 120 das Ventil 170 und die Ventile 96 - 116 selbsttätig steuert, um eine vorausgewählte Rahmenposition und/oder Eindringtiefe der Werkzeuge 24 während der Feldarbeit aufrechtzuerhalten. Die Steuereinheit 172 ist auf die Position des Hebels 174 und den Ausgang der Gerätesteuereinheit 120 auf der Leitung 176 empfindlich, um das Ventil 170 in die richtige Position zur Ausführung der ausgewählten Funktion zu bewegen, und die Gerätesteuereinheit 120 steuert die Ventile 96 - 116 entsprechend der Eingaben von den Leitungen 148 und 176 und von einer Bedienersteuereinheit 180, um individuelle Zylinderhalte-, Ausdehnungs- oder Einzugsfunktionen bereitzustellen. Die Gerätesteuereinheit 120 steuert auch die Zylindergeschwindigkeit (d. h. die Flussrate des hydraulischen Fluids) für die ausgewählte Funktion. Der Aufbau des Steuerventilzusammenbaus 160 ist vorzugsweise des Typs, der an den kommerziell verfügbaren Traktoren der Serien 8000, 8000 TEN oder 9000 der Marke John Deere verwendet wird. Das System misst den Fluss in das kolbenraumseitige Ende des Zylinders und den Fluss daraus hinaus ab. Das Proportionalventil des Zugfahrzeugs stellt die Flussrichtung und den Gesamtfluss zu allen Zylindern der anhebbaren Radzusammenbauten bereit. Es ist anzumerken, dass andere Typen von Arbeitsgerätesteuersystemen, die eine Hubsteuerung der Zusammenbauten 56, 58 und 70, 72 ermöglichen, mit der vorliegenden Erfindung verwendet werden können, und dass die Einzelheiten des Hubsteuersystems 90 hier als Hintergrundinformation gegeben werden.

Die Bedienersteuereinheit 180 umfasst konventionelle Bedienersteuerungen, um der Gerätesteuereinheit 120 Steuereingaben zuzuführen, einschließlich eines Tiefenspannungssignals über die Leitung 182 zur Tiefensteuerung des Arbeitsgeräts, eines Zwischentiefensignals über die Leitung 183, um eine vorausgewählte zweite Tiefeneinstellung (zusätzliche voreingestellte Tiefeneinstellungen können, wenn nötig, bereitgestellt werden) bereitzustellen, und eines Flügeltiefenversatzsignals über Leitungen 184 bzw. 185, um die inneren Flügelabschnitte 16, 18 und die äußeren Flügelabschnitte 20, 22 relativ zueinander und zum Hauptrahmen 12 verstellen zu können. Ein Hauptrahmenhöhenausgangssignal über die Leitung 186 und ein Versatzausschaltsignal über die Leitung 187 werden ebenfalls der Gerätesteuereinheit 120 zugeführt. Durch eine Stromversorgungsleitung 188 wird die Bedienersteuereinheit 180 mit Strom versorgt. Es kann auf die oben erwähnte US 5 957 218 verwiesen werden, in der die Hub-, Tiefensteuerungs- und Rahmennivellierungsfunktionen detaillierter diskutiert werden.

Zusätzlich zu den normalen Steuereingaben von der Bedienersteuereinheit 180 und den Fühlern 130 - 142 für die anhebbaren Radzusammenbauten 40, 42, 56, 58, 70 und 72 empfängt die Gerätesteuereinheit 120 durch Leitungen 196 Positionssignale von Elementen 192 und 194 auf dem Arbeitsgerät, wenn die Flügelabschnitte 16, 18, 20, 22 zwischen den Feldarbeitspositionen (Figur 1) und den Transportpositionen (Figur 3) bewegt werden. Wie in den Figuren 2 und 2a dargestellt, sind die Elemente 192 und 194 Umwandler oder Schalter, wie magnetische Reed-Schalter, die nahe des Scharnierbereichs des Hauptrahmens 12 abgestützt sind und auf die Bewegung eines Abschnitts der metallischen Scharnierstruktur 202 und 204 in die nähere Umgebung eines Schalters reagieren. Es ist anzumerken, dass die Elemente 192 und 194 aus einer Vielfalt von Sensoren ausgewählt werden können, einschließlich - jedoch nicht unbedingt beschränkt auf - Reed-Schalter oder induktive Näherungsschalter, Quecksilberschalter, Neigungsmesser und Drehpotentiometer, die mit einem Flügelabschnitt verbunden sind (s. beispielsweise 192a in Figur 1).

Wenn der rechte innere Flügelabschnitt 16 eingefaltet wird und eine vorbestimmte Position erreicht, die in Figur 2 als etwa um 45 Grad gegenüber der Horizontalen geneigt dargestellt ist, bewegt sich die Scharnierstruktur 202 in die Nähe des Elements 192, um den Reed-Schalter zu schließen und der Gerätesteuereinheit 120 ein Positionssignal des rechten Flügels zuzuführen. Der Reed-Schalter bleibt geschlossen, wenn sich der Flügelabschnitt 16 irgendwo im Bereich der eingefalteten Positionen zwischen der vorausgewählten Position und der Transportposition befindet. Das Element 194 wirkt in ähnlicher Weise in Reaktion auf den nahen Abstand der Scharnierstruktur 204, um der Gerätesteuereinheit 120 ein Positionssignal des linken Flügels zuzuführen, wenn sich der Flügelabschnitt 18 irgendwo zwischen der vorausgewählten Position von etwa 45 Grad und der völlig eingefalteten Transportposition befindet. Die Elemente 192 und 194 können schwerkraftbetätigte Schalter oder Potentiometer sein, die mit den Flügelabschnitten verbunden sind, so dass jeder von ihnen den Zustand oder den Ausgangspegel ändert, wenn der entsprechende Flügelabschnitt einen vorbestimmten Winkel gegenüber der Horizontalen erreicht. Es können auch mechanisch betätigte Schalter verwendet werden. Der jeweils gültige Winkel der Flügelabschnitte, an der das Positionssignal bereitgestellt wird, kann (mechanisch oder elektronisch) variiert werden. Der Winkel der Aktivierung des Schalters oder der Ausgangspegel des Umwandlers ist derart gewählt, um sicherzustellen, dass das Positionssignal der Gerätesteuereinheit 120 zugeführt wird, bevor die anhebbaren Radzusammenbauten 70 und 72 anfangen, sich während des Einfaltens des Rahmens 10 des Arbeitsgeräts zu berühren.

Wenn der Rahmen 10 des Arbeitsgeräts aus der in Figur 1 gezeigten Arbeitsposition auf die Transportposition gemäß Figur 3 hin gefaltet wird, werden zuerst die äußeren Flügelabschnitte 20 und 22 gegenüber den inneren Flügelabschnitten 16 und 18 verschwenkt, indem die Flügelfaltzylinder 36 und 38 eingezogen werden. Danach werden die Flügelfaltzylinder 26 und 28 der inneren Flügelabschnitte 16 und 18 eingezogen, um die Paare der Flügelrahmen 16, 20 und 18, 22 um die Schwenklager der Scharnierstrukturen 202 und 204 gegenüber dem Hauptrahmen 12 nach oben zu verschwenken. Sobald die Gerätesteuereinheit 120 von beiden der Elemente 192 und 194 Flügelpositionssignale empfängt, die darauf hinweisen, dass beide Flügelpaare in die vorausgewählte Position oder darüber hinaus verschwenkt sind und die anhebbaren Radzusammenbauten 70 und 72 bald in ein sich berührendes Verhältnis in unmittelbarer Nachbarschaft zueinander kommen können, aktiviert die Gerätesteuereinheit 120 die Ventile 114 und 116 und stellt sicher, dass der Steuerventilzusammenbau 160 die Leitung 162 unter Druck gesetzt hat, um die Zylinder 74 und 76 einzuziehen, was dazu führt, dass sich die Radzusammenbauten 70 und 72 zurückziehen oder gegenüber den Flügelabschnitten 20 und 22 einziehen. Die Flügelabschnitte 20 und 22 können sich dann vollständig in eine kompakte Konfiguration über dem Hauptrahmen 12 falten, ohne Berührung der anhebbaren Radzusammenbauten 70 und 72. Wenn die Flügelpositionssignale der Gerätesteuereinheit 120 zugeführt werden, aktiviert die Gerätesteuereinheit 120 die Ventile 102 und 104, um auch die Radzusammenbauten 56 und 58 zurück- oder einzuziehen, um die Transportbreite des Arbeitsgeräts zu vermindern und den Massenschwerpunkt der Flügelabschnitte 16, 18, 20 und 22 zur Vergrößerung der Stabilität näher an die Mitte des Arbeitsgeräts zu rücken.

Während des Auseinanderfaltens des Arbeitsgeräts aus der in Figur 3 dargestellten Transportposition auf die in Figur 1 gezeigte Arbeitsposition hin überwacht die Gerätesteuereinheit 120 kontinuierlich den Status der Elemente 192 und 194. Die Flügelfaltzylinder 26 und 28 der inneren Flügelabschnitte 16, 18 werden zuerst ausgestreckt, um die Paare der Flügelabschnitte 16, 20 und 18, 24 nach unten zu verschwenken. Sobald eines der Elemente 192 und 194 den Zustand oder Ausgangspegel ändert, was darauf hinweist, dass das Flügelrahmenpaar auf einer Seite des Arbeitsgeräts über die Stelle hinausgeschwenkt ist, an der eine Berührung zwischen den anhebbaren Radzusammenbauten 70 und 72 auftreten kann, veranlasst die Gerätesteuereinheit 120 die entsprechenden Radzusammenbauten auf dieser Seite sich auszustrecken, indem der Ventilzusammenbau 160 aktiviert wird, um die Leitung 152 unter Druck zu setzen und aktiviert die zwei entsprechenden der Steuerventile 102, 104, 114 und 116, um sie aus der Blockierposition herauszubewegen und die kolbenseitigen Enden der Zylinder auf dieser Seite mit unter Druck stehendem Fluid zu beaufschlagen, so dass sich die Zylinder ausstrecken. Wenn die Flügelabschnitte 16, 18, 20 und 22 auf den gegenüberliegenden Seiten des Arbeitsgeräts die vorausgewählte Position erreichen, beaufschlagt das zweite der Elemente 192 oder 194 die Gerätesteuereinheit 120 mit dem Positionssignal, um die anhebbaren Radzusammenbauten 70, 72 auf dieser Seite auszustrecken. Die Gerätesteuereinheit 120 überwacht auch die Ausgangssignale der Fühler 130, 132, 136, 138, 140 und 142 für die Position der anhebbaren Radzusammenbauten 40, 42, 56, 58, 70 und 72 und treibt die entsprechenden Zylinder an, um die anhebbaren Radzusammenbauten in Positionen zu bewegen, in der das Arbeitsgerät im Wesentlichen nivelliert ist, wenn es völlig auseinandergefaltet ist (Figur 1). Sobald die inneren Flügelabschnitte 16 und 18 völlig auseinandergefaltet sind, werden die äußeren Flügelabschnitte 20 und 22 nach außen und unten geschwenkt, indem die Flügelfaltzylinder 36 und 38 ausgestreckt werden. Der Bediener kann die gewünschten Höhen für die anhebbaren Radzusammenbauten unter Verwendung der Bedienersteuereinheit 180 eingeben, so dass das Arbeitsgerät nivelliert ist und sich die Werkzeuge 24 nach dem Auseinanderfalten in einem vorgewählten Abstand oberhalb des Bodens befinden. Sobald die Höhen eingegeben sind, wird jedes Mal die nivellierte Position erreicht, wenn das Arbeitsgerät auseinandergefaltet wird, ohne dass eine weitere Eingabe des Bedieners notwendig wäre.

## Patentansprüche

1. Faltbares landwirtschaftliches Arbeitsgerät mit einem sich quer zu einer Vorwärtsrichtung erstreckenden Mittelrahmen (12), Flügelabschnitten (16, 18, 20, 22), die schwenkbar an gegenüberliegenden Seiten des Mittelrahmens (12) angebracht und zwischen einer ausgefalteten Feldarbeitsposition, in der sie sich nach außen erstrecken, und einer eingefalteten Transportposition über dem Mittelrahmen (12) bewegbar sind, mit den Flügelabschnitten (16, 18, 20, 22) verbundenen, anhebbaren Einrichtungen, die zwischen ausgestreckten Arbeitspositionen und zurückgezogenen Positionen bewegbar sind, und einer Gerätesteuereinheit (120), die mit den anhebbaren Einrichtungen verbunden ist und ihr Ausstrecken und Einziehen steuert, wobei Elemente (192, 194) zum Fühlen der Positionen der Flügelabschnitte (16, 18) vorhanden sind, die auf die Bewegung der Flügelabschnitte (16, 18) zwischen der Arbeitsposition und der Transportposition reagieren und der Gerätesteuereinheit (120) Positionssignale zuführen und die Gerätesteuereinheit (120) auf die Positionssignale derart reagiert, dass sie die anhebbaren Einrichtungen zurückzieht, bevor die Flügelabschnitte (16, 18) die Transportposition erreichen, **dadurch gekennzeichnet, dass** die anhebbaren Einrichtungen an Seiten der Flügelabschnitte angebracht sind, die einander zugewandt sind, wenn sich die Flügelabschnitte (16, 18, 20, 22) in der Transportposition befinden, so dass durch das Einziehen der anhebbaren Einrichtungen eine Berührung der anhebbaren Einrichtungen untereinander in der Transportposition vermieden wird.

2. Arbeitsgerät nach Anspruch 1, **dadurch gekennzeichnet, dass** die Gerätesteuereinheit (120) auf die Positionssignale reagiert und die anhebbaren Einrichtungen zurückzieht, wenn die Flügelabschnitte (16, 18) während der Bewegung in die Transportposition über eine vorbestimmte Faltposition hinaus geschwenkt werden.

3. Arbeitsgerät nach einem der Ansprüche 1 oder 2, **dadurch gekennzeichnet, dass** die Gerätesteuereinheit (120) auf die Positionssignale reagiert und die anhebbaren Einrichtungen ausfährt, wenn die Flügelabschnitte (16, 18) während der Bewegung in die Arbeitsposition über eine vorbestimmte Ausfaltposition hinaus geschwenkt werden.

4. Arbeitsgerät nach einem der Ansprüche 1 bis 3, **dadurch gekennzeichnet, dass** die Gerätesteuereinheit (120) nur dann auf die Positionssignale reagiert und die anhebbaren Einrichtungen zurückzieht, wenn alle Flügelabschnitte (16, 18) während der Bewegung in die Transportposition über eine vorbestimmte Faltposition hinaus geschwenkt werden.

5. Arbeitsgerät nach einem der Ansprüche 1 bis 4, **dadurch gekennzeichnet, dass** die Elemente (192, 194) zum Fühlen der Positionen der Flügelabschnitte (16, 18) am Mittelrahmen (12) abgestützte Nährungsschalter und/oder mit den Flügelabschnitten (16, 18) verbundene Neigungsschalter umfassen.

6. Arbeitsgerät nach einem der Ansprüche 1 bis 5, **dadurch gekennzeichnet, dass** ein Fühler einen Positionswert über die Position des Mittelrahmens (12) gegenüber dem Bodenniveau bereitstellt, und dass die Gerätesteuereinheit (120) auf die Positionssignale reagiert und die anhebbaren Einrichtungen in Positionen verbringt, die von dem Positionswert abhängen.

7. Arbeitsgerät nach einem der Ansprüche 1 bis 6, **dadurch gekennzeichnet, dass** am Mittelrahmen (12) innere Flügelabschnitte (16, 18) angebracht sind, an deren Außenseite äußere Flügelabschnitte (20, 22) schwenkbar befestigt sind, die zwischen einer ausgeschwenkten Arbeitsstellung und einer eingeschwenkten Transportstellung bewegbar sind, in der sie die inneren Flügelabschnitte zumindest teilweise überdecken, dass die anhebbaren Einrichtungen an den äußeren Flügelabschnitten (20, 22) vorgesehen sind, dass die Elemente (192, 194) zum Fühlen der Positionen der Flügelabschnitte (16, 18) auf die Bewegung der inneren Flügelabschnitte (16, 18) zwischen der Arbeitsposition und der Transportposition reagieren, und dass die Gerätesteuereinheit (120) auf die Positionssignale derart reagiert, dass sie die anhebbaren Einrichtungen der äußeren Flügelabschnitte (20, 22) zurückzieht, bevor die äußeren Flügelabschnitte (20, 22) die Transportposition erreichen.

8. Arbeitsgerät nach einem der Ansprüche 1 bis 7, **dadurch gekennzeichnet, dass** die anhebbaren Einrichtungen Radzusammenbauten (70, 72) sind.

9. Arbeitsgerät nach einem der Ansprüche 7 oder 8, **dadurch gekennzeichnet, dass** die Gerätesteuereinheit (120) auf die Positionssignale reagiert und die anhebbaren Einrichtungen eines inneren Flügelabschnitts (16, 18) und eines äußeren Flügelabschnitts (20, 22) zurückzieht, wenn ein innerer Flügelabschnitt (16, 18) bei der Bewegung in die Transportposition über eine vorbestimmte Faltposition hinaus geschwenkt wird.

10. Arbeitsgerät nach einem der Ansprüche 7 bis 9, **dadurch gekennzeichnet, dass** die Gerätesteuereinheit (120) auf die Positionssignale reagiert und die anhebbaren Einrichtungen an einem inneren Flügelabschnitt (16, 18) und einem äußeren Flügelabschnitt (20, 22) ausfährt, wenn ein innerer Flügelabschnitt (16, 18) über eine erste Ausfaltposition hinaus verschwenkt wird und die anhebbaren Einrichtungen am jeweils anderen inneren Flügelabschnitt (16, 18) und äußeren Flügelabschnitt (20, 22) ausfährt, wenn der andere innere Flügelabschnitt (16, 18) über eine zweite Ausfaltposition hinaus verschwenkt wird.

## Claims

1. A folding agricultural utility implement with a central frame (12) extending transverse to a forward direction, wing sections (16, 18, 20, 22) which are pivotally attached on the opposite sides of the central frame (12) and can be moved between an folded out field working position, in which they extend outwards, and a folded in transport position over the central frame (12), devices which can be raised connected to the wing sections (16, 18, 20, 22), which devices are movable between extended working positions and retracted positions, and an implement control unit (120) which is connected to the devices which can be raised and controls their extension and retraction, wherein elements (192, 194) are provided for sensing the positions of the wing sections (16, 18) and react to the movement of the wing sections (16, 18) between the working position and the transport position and feed position signals to the implement control unit (120) and the implement control unit (120) so reacts to the position signals that it retracts the devices which can be raised before the wing sections (16, 18) reach the transport position, **characterized in that** the devices which can be raised are fitted on sides of the wing sections which face one another when the wing sections (16, 18, 20, 22) are located in the transport position, so that contact with one another of the devices which can be raised in the transport position is avoided by the retraction of the devices which can be raised.

2. A utility implement according to claim 1, **characterized in that** the implement control unit (120) reacts to the position signals and retracts the devices which can be raised when the wing sections (16, 18) are turned beyond a predetermined folded position during the movement into the transport position.

3. A utility implement according to either claim 1 or 2, **characterized in that** the implement control unit (120) reacts to the position signals and extends the devices which can be raised when the wing sections (16, 18) are turned beyond a predetermined folded out position during the movement into the working position.

4. A utility implement according to any of claims 1 to 3, **characterized in that** the implement control unit (120) only reacts to the position signals and retracts the devices which can be raised when all wing sections (16, 18) are turned beyond a predetermined folded position during the movement into the transport position.

5. A utility implement according to any of claims 1 to 4, **characterized in that** the elements (192, 194) for sensing the positions of the wing sections (16, 18) comprise proximity switches carried on the central frame (12) and/or tilt switches connected to the wing sections (16, 18).

6. A utility implement according to any of claims 1 to 5, **characterized in that** a sensor provides a position value regarding the position of the central frame (12) relative to the ground level, and **in that** the implement control unit (120) reacts to the position signals and brings the devices which can be raised into positions which depend on the position value.

7. A utility implement according to any of claims 1 to 6, **characterized in that** inner wing sections (16, 18) are fitted on the central frame (12), outer wing sections (20, 22) are pivotally fitted on the outer ends of these and are movable between an out-turned working position and in-turned transport position in which they at least partially overlap the inner wing sections, **in that** the devices which can be raised are provided on the outer wing sections (20, 22), **in that** the elements (192, 194) for sensing the positions of the wing sections (16, 18) react to the movement of the inner wing sections (16, 18) between the working position and the transport position and **in that** the implement control unit (120) so reacts to the position signals that it retracts the devices which can be raised of the outer wing sections (20, 22) before the outer wing sections (20, 22) reach the transport position.

8. A utility implement according to any of claims 1 to 7, **characterized in that** the devices which can be raised are wheel assemblies (70, 72).

9. A utility implement according to either claim 7 or 8, **characterized in that** the implement control unit (120) reacts to the position signals and retracts the devices which can be raised of an inner wing section (16, 18) and of an outer wing section (20, 22) when an inner wing section (16, 18) is turned beyond a predetermined folded position in the movement into the transport position.

10. A utility implement according to any of claims 7 to 9, **characterized in that** the implement control unit (120) reacts to the position signals and extends the devices which can be raised on an inner wing section (16, 18) and an outer wing sections (20, 22) when an inner wing section (16, 18) is turned beyond a first folded out position and extends the devices which can be raised on the respective other inner wing section (16, 18) and outer wing section (20, 22) extend, when the other inner wing section (16, 18) is turned beyond a second folded out position.

## Revendications

1. Outil de travail agricole repliable comportant un châssis central (12), orienté transversalement à la direction d'avancement, des tronçons latéraux (16, 18, 20, 22) qui sont montés pivotants sur des côtés opposés du châssis central (12) et qui peuvent être déplacés entre une position de travail sur le champ dépliée, dans laquelle ils s'étendent vers l'extérieur, et une position de transport repliée au-dessus du châssis central (12), des dispositifs relevables, assemblés aux tronçons latéraux (16, 18, 20, 22) et pouvant être déplacés entre des positions de travail abaissées et des positions relevées, et une unité de commande de l'outil (120), qui est reliée aux dispositifs relevables et qui commande leur abaissement et leur relevage, sachant qu'il est prévu des éléments (192, 194) destinés à détecter les positions des tronçons latéraux (16, 18), lesquels réagissent au mouvement des tronçons latéraux (16, 18) entre la position de travail et la position de transport et transmettent des signaux de position vers l'unité de commande de l'outil (120), et l'unité de commande de l'outil (120) réagit aux signaux de position de telle sorte qu'elle relève les dispositifs relevables avant que les tronçons latéraux (16, 18) n'aient atteint la position de transport, **caractérisé en ce que** les dispositifs relevables sont montés sur les tronçons latéraux, à savoir sur des côtés orientés l'un vers l'autre lorsque les tronçons latéraux (16, 18, 20, 22) sont dans la position de transport, de telle sorte que le relevage des dispositifs relevables empêche que les dispositifs relevables entrent en contact les uns avec les autres dans la position de transport.

2. Outil de travail selon la revendication 1, **caractérisé en ce que** l'unité de commande de l'outil (120) réagit aux signaux de position et relève les dispositifs relevables lorsque les tronçons latéraux (16, 18) pivotent au-delà d'une position de pliage prédéterminée pendant le déplacement dans la position de transport.

3. Outil de travail selon la revendication 1 ou 2, **caractérisé en ce que** l'unité de commande de l'outil (120) réagit aux signaux de position et abaisse les dispositifs relevables lorsque les tronçons latéraux (16, 18) pivotent au-delà d'une position de dépliage prédéterminée pendant le déplacement dans la position de travail.

4. Outil de travail selon l'une quelconque des revendications 1 à 3, **caractérisé en ce que** l'unité de commande de l'outil (120) réagit seulement aux signaux de position et relève les dispositifs relevables lorsque tous les tronçons latéraux (16, 18) pivotent au-delà d'une position de pliage prédéterminée pendant le déplacement dans la position de transport.

5. Outil de travail selon l'une quelconque des revendications 1 à 4, **caractérisé en ce que** les éléments (192, 194) destinés à détecter les positions des tronçons latéraux (16, 18) comportent des détecteurs de proximité en appui sur le châssis central (12) et/ou des détecteurs d'inclinaison reliés aux tronçons latéraux (16, 18).

6. Outil de travail selon l'une quelconque des revendications 1 à 5, **caractérisé en ce qu'**un capteur délivre une valeur de position relative à la position du châssis central (12) par rapport au niveau du sol, et **en ce que** l'unité de commande de l'outil (120) réagit aux signaux de position et amène les dispositifs relevables dans des positions qui dépendent de la valeur de position.

7. Outil de travail selon l'une quelconque des revendications 1 à 6, **caractérisé en ce que** contre le châssis central (12) sont montés des tronçons latéraux intérieurs (16, 18), sur les côtés extérieurs desquels sont fixés de manière pivotante des tronçons latéraux extérieurs (20, 22), lesquels peuvent être transposés entre une position de travail dépliée et une position de transport repliée, dans laquelle ils couvrent au moins en partie les tronçons latéraux intérieurs, **en ce que** les dispositifs relevables sont prévus sur les tronçons latéraux extérieurs (20, 22), **en ce que** les éléments (192, 194) destinés à détecter les positions des tronçons latéraux (16, 18) réagissent au mouvement des tronçons latéraux intérieurs (16, 18) entre la position de travail et la position de transport, et **en ce que** l'unité de commande de l'outil (120) réagit aux signaux de position de telle sorte qu'elle relève les dispositifs relevables des tronçons latéraux extérieurs (20, 22) avant que les tronçons latéraux extérieurs (20, 22) aient atteint leur position de transport.

8. Outil de travail selon l'une quelconque des revendications 1 à 7, **caractérisé en ce que** les dispositifs relevables sont des ensembles de roues (70, 72).

9. Outil de travail selon la revendication 7 ou 8, **caractérisé en ce que** l'unité de commande de l'outil (120) réagit aux signaux de position et relève les dispositifs relevables de l'un des tronçons latéraux intérieurs (16, 18) et de l'un des tronçons latéraux extérieurs (20, 22) lorsqu'un tronçon latéral intérieur (16, 18) pivote au-delà d'une position de pliage prédéterminée pendant le mouvement dans la position de transport.

10. Outil de travail selon l'une quelconque des revendications 7 à 9, **caractérisé en ce que** l'unité de commande de l'outil (120) réagit aux signaux de position et abaisse les dispositifs relevables sur un tronçon latéral intérieur (16, 18) et un tronçon latéral extérieur (20, 22) lorsqu'un tronçon latéral intérieur (16, 18) pivote au-delà d'une première position de dépliage prédéterminée et abaisse les dispositifs relevables sur respectivement l'autre tronçon latéral intérieur (16, 18) et l'autre tronçon latéral extérieur (20, 22) lorsque l'autre tronçon latéral intérieur (16, 18) pivote au-delà d'une deuxième position de dépliage.
